# EUROPEAN PATENT SPECIFICATION

(11) **EP 4 080 142 B1**
(45) Date of publication and mention of the grant of the patent: **18.10.2023**
(21) Application number: 19956434.5
(22) Date of filing: 18.12.2019
(51) Int. Cl.: G01K 1/143, G01K 1/14, F24F 11/89, F24F 110/10

(54) **TEMPERATURE-SENSOR FIXING DEVICE AND COMPRESSOR**
TEMPERATURSENSOR-BEFESTIGUNGSVORRICHTUNG UND KOMPRESSOR
DISPOSITIF DE FIXATION DE CAPTEUR DE TEMPÉRATURE ET COMPRESSEUR

(43) Date of publication of application: 26.10.2022
(73) Proprietor: MITSUBISHI ELECTRIC CORPORATION, Chiyoda-ku Tokyo 100-8310 (JP)
(72) Inventor: KOMATSU, Mio, Tokyo 102-0073 (JP); ONUKI, Ryozo, Tokyo 102-0073 (JP)
(74) Representative: Diehl & Partner
(86) International application number: PCT/JP2019/049585
(87) International publication number: WO 2021/124474

(56) References cited:
- EP-A1- 2 910 915
- WO-A1-2017/195336
- CN-A- 1 979 104
- JP-A- H04 158 176
- JP-A- H11 316 078
- JP-A- 2002 030 851
- JP-A- 2010 139 159
- JP-A- 2015 152 298
- JP-U- H0 178 873
- JP-U- H0 540 773
- KR-B1- 100 757 946
- US-A1- 2008 042 513

## Description

### Technical Field

The present disclosure relates to a temperature-sensor fixing device for fixing a temperature sensor in place, and a compressor including the temperature-sensor fixing device.

### Background Art

Temperature sensors are used in the related art to measure the temperature of a measured object, which is an object to be measured. In some cases, such a temperature sensor is fixed to the measured object by use of a fixing device. As an example of such a fixing device, a temperature-sensor fixing device described below has been proposed. The temperature-sensor fixing device includes a sensor holder and a fixing part. The sensor holder is coupled to a measured object. The fixing part is a metal plate with which a temperature sensor, which is to be inserted into the sensor holder, is fixed in place so that the temperature sensor does not fall off the sensor holder (see, for example, Japanese Unexamined Patent Application Publication No. 2008-20175).

Documents CN 1 979 104 A and EP 2 910 915 A1 each disclose the features of the preamble of independent claim 1. Furthermore, holders comprising some features of the preamble of independent claim 1 are disclosed by each prior art document WO 2017/195336 A1 and JP H05 40773 U1.

### Summary of Invention

### Technical Problem

A potential problem with the temperature-sensor fixing device described in Japanese Unexamined Patent Application Publication No. 2008-20175 is that when the temperature sensor is attached into the sensor holder, the fixing part serving as a spring may deform, which may cause the fixing part to move out of place in detaching the temperature sensor. Consequently, the fixing part may narrow the attachment opening for the sensor holder. This may result in reduced ease of assembly in accommodating the temperature sensor into the sensor holder when the temperature sensor is to be attached into the sensor holder again.

The present disclosure aims to address the above-mentioned problem. It is an object of the present disclosure to provide a temperature-sensor fixing device that, when a temperature sensor is attached into a sensor holder, prevents or reduces deformation of a fixing part serving as a spring, and that prevents or reduces movement of the fixing part out of place in detaching the temperature sensor, and a compressor including the temperature-sensor fixing device.

### Solution to Problem

The above object is solved by the combination of features of independent claim 1. Preferred embodiments are defined in the dependent claims.

A compressor according to an embodiment of the present disclosure includes a hermetic compressor, a compression mechanism portion, an electric motor portion, a temperature sensor, and the temperature-sensor fixing device of independent claim 1. The hermetic container has a cylindrical shape. The compression mechanism portion is accommodated inside the hermetic container and configured to compress refrigerant. The electric motor portion is accommodated inside the hermetic container and configured to drive the compression mechanism portion. The temperature sensor is fixed to the hermetic container, and positioned opposite to the electric motor portion.

### Advantageous Effects of Invention

According to an embodiment of the present disclosure, the temperature-sensor fixing device has the first bent portion bent to form an acute angle between the pressing plate and the connecting plate. The first bent portion is positioned to face the edge of the sensor holder that defines the opening. Consequently, the edge of the sensor holder serves to prevent or reduce movement of the first bent portion in a direction perpendicular to a surface of the sensor holder that defines the edge of the sensor holder. As a result, the temperature-sensor fixing device makes it possible to prevent or reduce deformation of the fixed plate that may occur when the connecting plate moves out of place, and also to prevent or reduce a movement of the connecting plate that causes the connecting plate to block the opening.

### Brief Description of Drawings

[Fig. 1] Fig. 1 is a refrigerant circuit diagram illustrating the configuration of a refrigeration cycle apparatus including a compressor according to an embodiment.
[Fig. 2] Fig. 2 is a frontward perspective view of an example of an outdoor unit illustrated in Fig. 1.
[Fig. 3] Fig. 3 is a partially exploded perspective view of the outdoor unit illustrated in Fig. 2.
[Fig. 4] Fig. 4 is a top view of the outdoor unit illustrated in Fig. 2 with a top panel removed.
[Fig. 5] Fig. 5 is a side view of the outdoor unit illustrated in Fig. 2.
[Fig. 6] Fig. 6 is a conceptual vertical sectional view of an exemplary compressor.
[Fig. 7] Fig. 7 is an exploded perspective view of a temperature-sensor fixing device illustrated in Fig. 6.
[Fig. 8] Fig. 8 is a plan view of a plate spring illustrated in Fig. 7.
[Fig. 9] Fig. 9 is a side view of the plate spring illustrated in Fig. 7.
[Fig. 10] Fig. 10 is a front view of the plate spring illustrated in Fig. 7.
[Fig. 11] Fig. 11 conceptually illustrates the temperature-sensor fixing device according to the embodiment prior to insertion of a temperature sensor.
[Fig. 12] Fig. 12 conceptually illustrates the temperature-sensor fixing device according to the embodiment with the temperature sensor accommodated inside the temperature-sensor fixing device.
[Fig. 13] Fig. 13 conceptually illustrates a temperature-sensor fixing device according to a comparative example with the temperature sensor accommodated inside the temperature-sensor fixing device.
[Fig. 14] Fig. 14 conceptually illustrates the temperature-sensor fixing device according to the comparative example after the temperature sensor is detached. Description of Embodiments

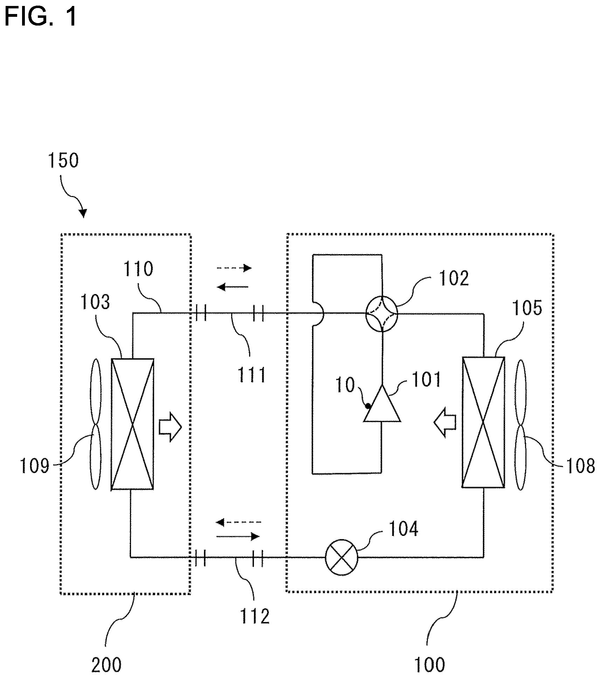

A temperature-sensor fixing device 10 and a compressor 101 according to an embodiment are described below with reference to the drawings or other illustrations. In the figures below including Fig. 1, the relative dimensions, shapes, and other features of components may differ from those of the actual components. In the figures below, the same reference signs are used to indicate the same or corresponding components or elements throughout the specification. Although terms representing directions (e.g., "upper", "lower", "right", "left", "front", and "rear") are used as appropriate to facilitate understanding of the present disclosure, such terms are for illustrative purposes only and not intended to limit the corresponding device or component to any particular placement or orientation.

### Embodiment

### [Refrigeration Cycle Apparatus 150]

Fig. 1 is a refrigerant circuit diagram illustrating the configuration of a refrigeration cycle apparatus 150 including the compressor 101 according to Embodiment 1. Reference is first made to the refrigeration cycle apparatus 150 to describe the compressor 101 to which the temperature-sensor fixing device 10 is to be attached, and an outdoor unit 100 including the compressor 101. In Fig. 1, dotted arrows represent the direction in which refrigerant flows in a refrigerant circuit 110 during cooling operation, and solid arrows represent the direction in which refrigerant flows in the refrigerant circuit 110 during heating operation.

In the following description of the embodiment, an air-conditioning apparatus is described as an example of the refrigeration cycle apparatus 150. The refrigeration cycle apparatus 150 is used for, for example, refrigeration or air-conditioning purposes, such as for refrigerators, freezers, vending machines, air-conditioning apparatuses, refrigeration apparatuses, and water heaters. The illustrated refrigerant circuit 110 is given only as an example, and configurations of circuit elements or other features are not limited to the particular details described below with reference to the embodiment but may be changed or modified as appropriate within the technical scope of the embodiment.

The refrigeration cycle apparatus 150 includes the refrigerant circuit 110 formed by connecting the following components in a loop via a refrigerant pipe: the compressor 101, a flow switching device 102, an indoor heat exchanger 103, a pressure reducing device 104, and an outdoor heat exchanger 105. The refrigeration cycle apparatus 150 includes the outdoor unit 100, and an indoor unit 200.

The outdoor unit 100 houses the compressor 101, the flow switching device 102, the outdoor heat exchanger 105, the pressure reducing device 104, and outdoor air-sending devices 108. The indoor unit 200 houses the indoor heat exchanger 103, and an indoor air-sending device 109. The outdoor unit 100 and the indoor unit 200 are connected to each other via two extension pipes, an extension pipe 111 and an extension pipe 112, which are a part of the refrigerant pipe.

The compressor 101 is a piece of fluid machinery that compresses sucked refrigerant and discharges the refrigerant. The flow switching device 102 is, for example, a four-way valve. The flow switching device 102 is configured to, under control by a controller (not illustrated), switch the flows of refrigerant between cooling operation and heating operation.

The indoor heat exchanger 103 is a heat exchanger configured to exchange heat between refrigerant flowing inside the indoor heat exchanger 103, and indoor air supplied by the indoor air-sending device 109. The indoor heat exchanger 103 serves as a condenser during heating operation, and serves as an evaporator during cooling operation. The indoor air-sending device 109 supplies air to the indoor heat exchanger 103.

The pressure reducing device 104 is, for example, an expansion valve, and configured to reduce the pressure of refrigerant. As the pressure reducing device 104, an electronic expansion valve may be used whose opening degree is adjusted through control by the controller.

The outdoor heat exchanger 105 is a heat exchanger configured to exchange heat between refrigerant flowing inside the outdoor heat exchanger 105, and air supplied by the outdoor air-sending devices 108. The outdoor heat exchanger 105 serves as an evaporator during heating operation, and serves as a condenser during cooling operation. The outdoor air-sending devices 108 supply air to the outdoor heat exchanger 105.

### [Operation of Refrigeration Cycle Apparatus 150]

Reference is made below to Fig. 1 to describe how the refrigeration cycle apparatus 150 operates. During heating operation of the refrigeration cycle apparatus 150, high-pressure and high-temperature refrigerant in a gaseous state discharged from the compressor 101 flows via the flow switching device 102 into the indoor heat exchanger 103, where the refrigerant condenses through heat exchange with air supplied by the indoor air-sending device 109. The refrigerant having condensed changes into a high-pressure liquid state, and then flows out of the indoor heat exchanger 103. The resulting refrigerant is then turned into a low-pressure and two-phase gas-liquid state by the pressure reducing device 104. The low-pressure refrigerant in the two-phase gas-liquid state flows into the outdoor heat exchanger 105, where the refrigerant evaporates through heat exchange with air supplied by the outdoor air-sending devices 108. The refrigerant having evaporated changes into a low-pressure gaseous state and is then sucked into the compressor 101.

During cooling operation of the refrigeration cycle apparatus 150, refrigerant flows in the refrigerant circuit 110 in a direction opposite to the direction in which refrigerant flows during heating operation. That is, during cooling operation of the refrigeration cycle apparatus 150, high-pressure and high-temperature refrigerant in a gaseous state discharged from the compressor 101 flows via the flow switching device 102 into the outdoor heat exchanger 105, where the refrigerant condenses through heat exchange with air supplied by the outdoor air-sending devices 108. The refrigerant having condensed changes into a high-pressure liquid state, and then flows out of the outdoor heat exchanger 105. The resulting refrigerant is then turned into a low-pressure and two-phase gas-liquid state by the pressure reducing device 104. The low-pressure refrigerant in the two-phase gas-liquid state flows into the indoor heat exchanger 103, where the refrigerant evaporates through heat exchange with air supplied by the indoor air-sending device 109. The refrigerant having evaporated changes into a low-pressure gaseous state and is then sucked into the compressor 101.

### [Configuration of Outdoor Unit 100]

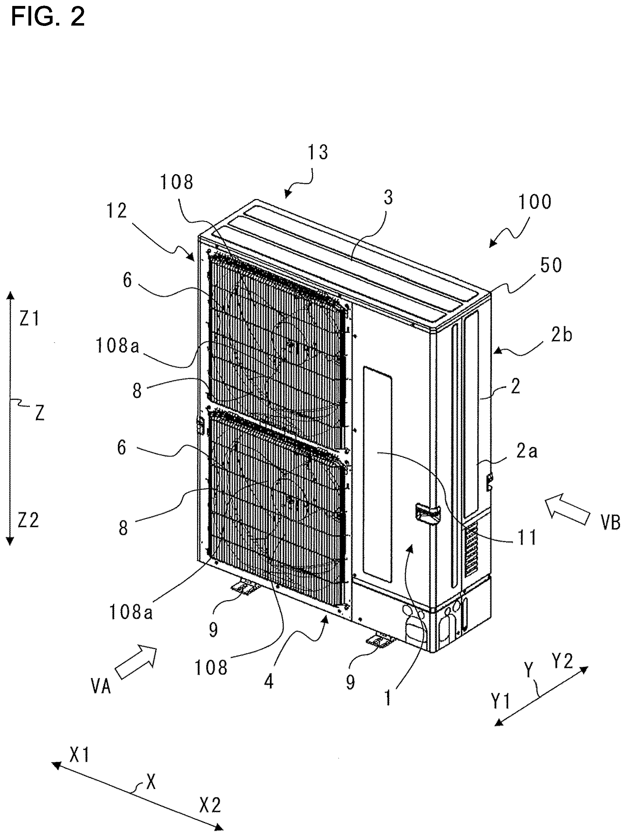

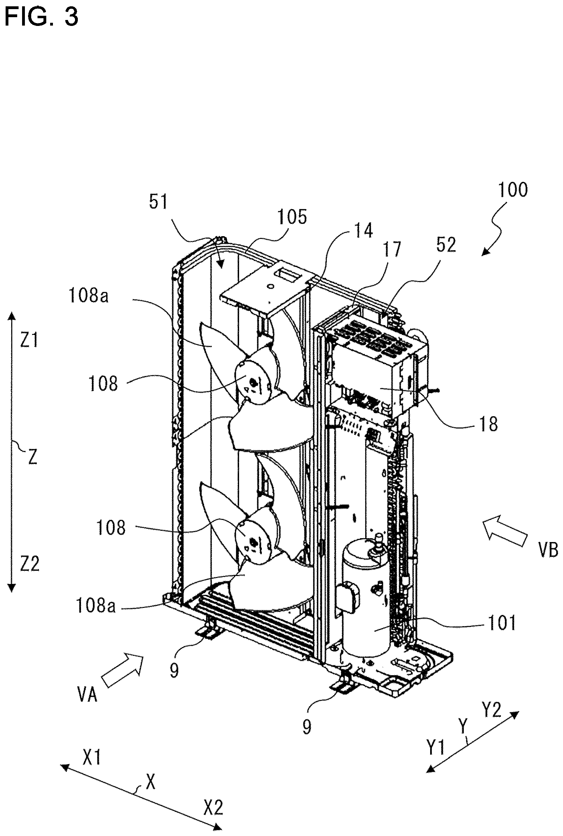

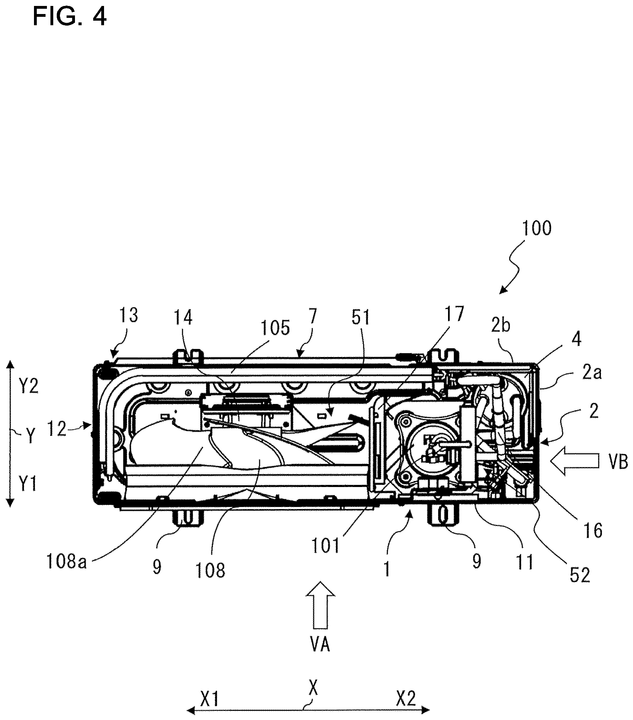

Fig. 2 is a frontward perspective view of an example of the outdoor unit 100 illustrated in Fig. 1. Fig. 3 is a partially exploded perspective view of the outdoor unit 100 illustrated in Fig. 2. Fig. 4 is a top view of the outdoor unit 100 illustrated in Fig. 2 with a top panel 3 removed. In Fig. 4, a part of a motor support 14 is not depicted to aid in clear illustration of the internal structure of a housing 50.

Reference is made below to Figs. 2 to 4 to describe the outdoor unit 100 of the air-conditioning apparatus. In the figures below including Fig. 2, the X-axis represents the left-right direction of the outdoor unit 100, the Y-axis represents the front-rear direction of the outdoor unit 100, and the Z-axis represents the top-bottom direction of the outdoor unit 100. An arrow VA in Figs. 2 to 4 represents the direction in which the outdoor unit 100 is viewed from front, and an arrow VB represents the direction in which the outdoor unit 100 is viewed from the side. More specifically, in the following description of the outdoor unit 100 made with reference to Figs. 2 to 4 where, with the outdoor unit 100 viewed from front, X1 represents the left side, X2 represents the right side, Y1 along the Y-axis represents the front side, Y2 along the Y-axis represents the rear side, Z1 along the Z-axis represents the top or upper side, and Z2 along the Z-axis represents the bottom or lower side. The relative positions of individual components (e.g., their relative vertical positions) described in the specification basically correspond to those when the outdoor unit 100 is installed in a usable condition.

### (Exterior of Outdoor Unit 100)

As illustrated in Fig. 2, the outdoor unit 100 includes the housing 50 formed in a substantially cuboid shape. The housing 50 of the outdoor unit 100 is made of sheet metals, and defines the exterior of the outdoor unit 100. The housing 50 of the outdoor unit 100 includes an exterior panel 1, a side panel 2, the top panel 3, and a bottom plate 4.

The exterior panel 1 is a sheet metal panel. The exterior panel 1 has a front portion 11, a side portion 12, and a back portion 13 that are integrated with each other. The front portion 11 defines a lateral wall portion at the front of the housing 50, the side portion 12 defines a lateral wall portion at the side of the housing 50, and the back portion 13 defines a part of a lateral wall portion at the back of the housing 50. Although the exterior panel 1 includes the front portion 11 and the side portion 12 that are integrated with each other, the exterior panel 1 may not necessarily be configured as described above. Alternatively, the exterior panel 1 may be made up of multiple sheet metal panels such that the front portion 11 and the side portion 12 are formed as separate parts.

The front portion 11 defines a lateral wall of the housing 50 through which air is to be blown. The front portion 11 has an air outlet 8 with a circular shape. Air sucked by the outdoor air-sending devices 108 into the housing 50 through an opening 7 at the back of the housing 50 or through an opening (not illustrated) at the side of the housing 50 is blown out of the housing 50 through the air outlet 8. A fan guard 6 having a rectangular shape is attached to the front portion 11 of the exterior panel 1 to cover the air outlet 8 to thereby protect propeller fans 108a of the outdoor air-sending devices 108. In an alternative configuration, the front portion 11 may be made up of two parts, one covering an air-sending device chamber 51 described later and the other covering a machine chamber 52 described later.

The side portion 12 defines a lateral wall extending in the front-rear direction (Y-axis direction) of the housing 50. When the outdoor heat exchanger 105, which is to be placed inside the housing 50, is disposed in the radial directions of the outdoor air-sending devices 108, such as by being disposed in an L-shape in top view, the side portion 12 is provided with an opening for admitting outdoor air into the housing 50. The side portion 12 may be made up of a single part or multiple parts.

The back portion 13 defines a part of the back side of the housing 50. The exterior panel 1 has the front portion 11, the side portion 12, and the back portion 13 that are integrated with each other. Although the exterior panel 1 includes the front portion 11 and the side portion 12 that are bent and integrated with each other, the exterior panel 1 may not necessarily be configured as described above. Alternatively, the exterior panel 1 may be made up of multiple sheet metal panels such that the side portion 12 and the back portion 13 are formed as separate parts. The back portion 13 may be made up of a single part or multiple parts.

The opening 7 is defined by the respective edges of the back portion 13, the top panel 3, the side panel 2, and the bottom plate 4. The opening 7 is an air inlet defined in the housing 50. Activation of the outdoor air-sending devices 108 causes air to flow into the housing 50 from outside through the opening 7.

The side panel 2 has a second side portion 2a, which is opposite to the side portion 12 and vertically elongated, and a second back portion 2b, which is opposite to a part of the front portion 11. The second side portion 2a defines a lateral wall portion at the side of the housing 50, and the second back portion 2b defines a part of a lateral wall portion at the back of the housing 50. The second back portion 2b defines, together with the back portion 13, a lateral wall portion at the back of the housing 50. Although the second back portion 2b and the back portion 13 of the housing 50 are formed as separate parts, the second back portion 2b and the back portion 13 may be integrated with each other to define a lateral wall portion at the back of the housing 50.

Although the side panel 2 includes the second side portion 2a and the second back portion 2b that are integrated with each other, the side panel 2 may not necessarily be configured as described above. Alternatively, the side panel 2 may be made up of two sheet metal panels such that the second side portion 2a and the second back portion 2b are formed as separate parts. Each of the second side portion 2a and the second back portion 2b may be made up of multiple parts. For example, the second side portion 2a may be divided into separate parts in the front-rear direction of the housing 50, and the forwardly located part may be integrated with the front portion 11.

The top panel 3 defines the top plate of the housing 50. The top panel 3 is a sheet metal panel that covers structures disposed inside the housing 50, such as the outdoor air-sending devices 108, the outdoor heat exchanger 105, a refrigerant pipe 16, and the compressor 101. The top panel 3 is attached to the respective upper edges of the exterior panel 1 and the side panel 2.

The bottom plate 4 is located opposite to the top panel 3 of the housing 50, and defines the bottom wall of the housing 50. Inside the housing 50, at least the outdoor heat exchanger 105, the outdoor air-sending devices 108, and the compressor 101 are disposed over the bottom plate 4. The exterior panel 1 and the side panel 2 are attached to the bottom plate 4. The bottom plate 4 has multiple legs 9 provided on its undersurface. The legs 9 each serve as a base for fixing the outdoor unit 100 to a place where the outdoor unit 100 is to be installed.

### (Internal Configuration of Outdoor Unit 100)

Reference is made below to Figs. 2 to 4 to describe the internal configuration of the outdoor unit 100 of the air-conditioning apparatus. The outdoor unit 100 includes the following components inside the housing 50: a partition plate 17, the outdoor heat exchanger 105, the outdoor air-sending devices 108, the motor support 14, and the compressor 101.

The partition plate 17 is a partition wall disposed inside the housing 50 to divide the internal space of the housing 50 of the outdoor unit 100 into the air-sending device chamber 51 and the machine chamber 52. The partition plate 17 is a plate-shaped part, and formed by, for example, bending a sheet metal or other material. The partition plate 17 is disposed on the bottom plate 4 inside the housing 50. The partition plate 17 extends upward (in the Z-axis direction) from the bottom plate 4, and also extends in the front-rear direction (Y-axis direction) of the bottom plate 4.

The air-sending device chamber 51 is a space enclosed by the exterior panel 1, the top panel 3, the bottom plate 4, and the partition plate 17. The air-sending device chamber 51 is designed to allow outdoor air to be admitted from outside of the outdoor unit 100 through an air inlet such as the opening 7, and to allow the air inside the outdoor unit 100 to be discharged to the outside of the outdoor unit 100 through the air outlet 8. The machine chamber 52 is a space enclosed by the front portion 11 of the exterior panel 1, the side panel 2, the top panel 3, the bottom plate 4, and the partition plate 17.

The air-sending device chamber 51 inside the housing 50 houses the outdoor heat exchanger 105, and the outdoor air-sending devices 108 positioned opposite to the outdoor heat exchanger 105. The machine chamber 52 inside the housing 50 houses the compressor 101, the refrigerant pipe 16, and an electrical component box 18. The refrigerant pipe 16 is connected to the compressor 101, and is a part of the refrigerant circuit 110.

The outdoor heat exchanger 105 may be formed as, for example, a fin-and-tube heat exchanger. The outdoor heat exchanger 105 is formed in an L-shaped when viewed in a direction perpendicular to the bottom plate 4. The outdoor heat exchanger 105 is disposed between the housing 50 and the outdoor air-sending devices 108. Although the outdoor heat exchanger 105 has an L-shape in the illustrated embodiment, the outdoor heat exchanger 105 may have another shape when viewed in a direction perpendicular to the bottom plate 4. For example, the outdoor heat exchanger 105 may have an I-shape, or may have a U-shape.

The outdoor air-sending devices 108 generate a circulation of air for efficient heat exchange in the outdoor heat exchanger 105. The outdoor air-sending devices 108 produce a negative pressure between the outdoor heat exchanger 105 and the propeller fans 108a. The outdoor air-sending devices 108 thus draw outside air into the housing 50 from the back or side of the housing 50, and discharge outside air drawn into the outdoor unit 100 toward the outside of the housing 50 from the front of the outdoor unit 100.

The outdoor unit 100 includes two outdoor air-sending devices 108, behind which the outdoor heat exchanger 105 is disposed to surround each of the outdoor air-sending devices 108. That is, the outdoor unit 100 is a dual-fan outdoor unit for an air-conditioning apparatus. Although the outdoor unit 100 includes two outdoor air-sending devices 108, this is not intended to limit the structure of the outdoor unit 100. Alternatively, for example, the outdoor unit 100 may include a single outdoor air-sending device 108, or may include three or more outdoor air-sending devices 108.

The motor support 14 is a columnar part disposed inside the housing 50 such that the motor support 14 extends between the bottom plate 4 and the top panel 3 in the top-bottom direction. The outdoor air-sending devices 108 are fixed to and supported by the motor support 14. The motor support 14 is fixed to the bottom plate 4 by screwing or other method.

The electrical component box 18 houses electrical components such as a control component for controlling operation of the outdoor unit 100. The electrical component box 18 is disposed above the compressor 101.

The compressor 101 sucks refrigerant at a low temperature and low pressure, compresses the sucked refrigerant into a high-temperature and high-pressure state, and discharges the refrigerant. The compressor 101 is, for example, a rotary, scroll, or vane compressor. The compressor 101 may include an inverter that allows the capacity of the compressor 101 to be controlled.

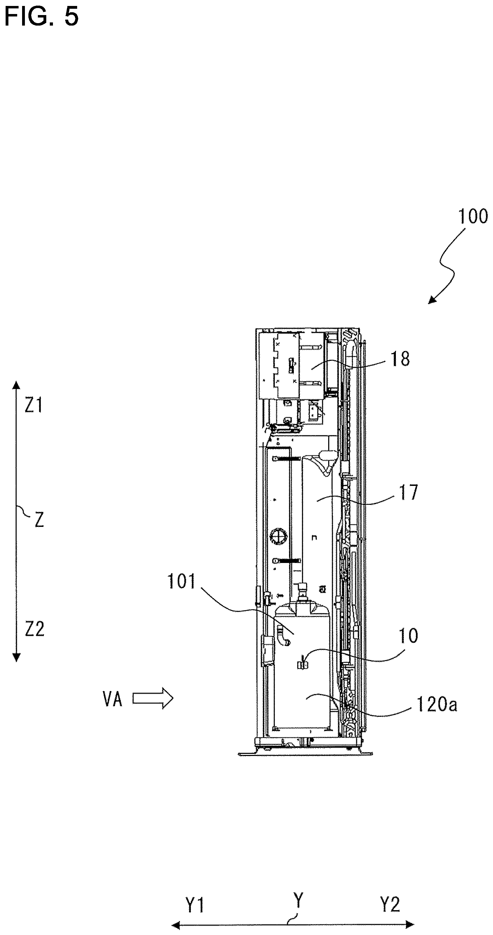

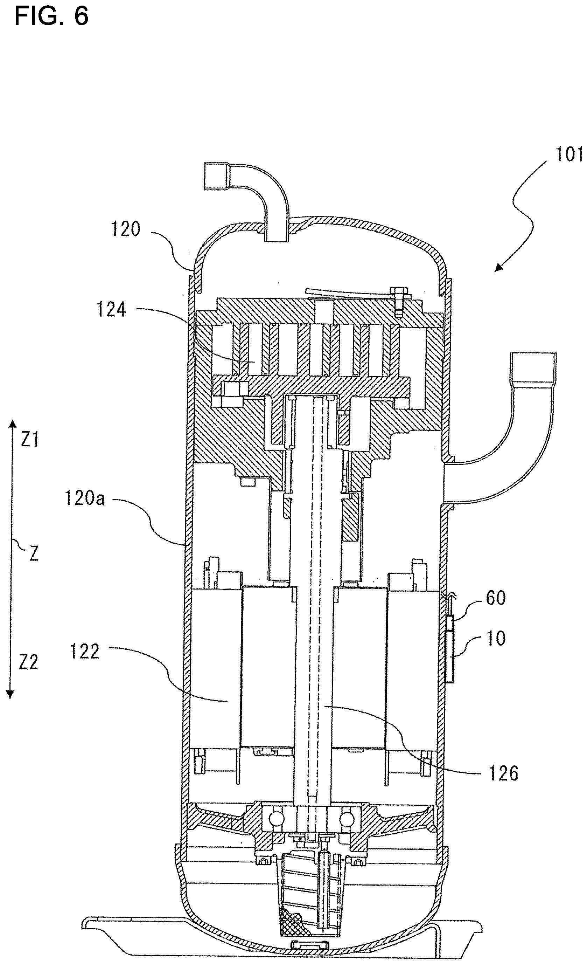

Fig. 5 is a side view of the outdoor unit 100 illustrated in Fig. 2. Fig. 6 is a conceptual vertical sectional view of an example of the compressor 101. Reference is made below to Figs. 5 and 6 to describe the compressor 101 and the temperature-sensor fixing device 10.

Although the compressor 101 is depicted in Fig. 6 as a scroll compressor, the scroll compressor is depicted only as an example of the compressor 101, and the compressor 101 is not limited to such a scroll compressor. The compressor 101 includes a hermetic container 120, which defines the exterior of the compressor 101 and has a cylindrical shape, and an electric motor portion 122 and a compression mechanism portion 124, which are accommodated inside the hermetic container 120. The compressor 101 includes a temperature sensor 60, which is fixed to an outer circumferential wall 120a of the hermetic container 120, and the temperature-sensor fixing device 10, which fixes the temperature sensor 60 to the outer circumferential wall 120a of the hermetic container 120.

The electric motor portion 122 generates a rotary motion inside the hermetic container 120 that causes a rotary shaft 126 to rotate. The electric motor portion 122 drives the compression mechanism portion 124 via the rotary shaft 126. The compression mechanism portion 124 is accommodated in the hermetic container 120, and compresses refrigerant flowing into the hermetic container 120. The hermetic container 120, which houses the electric motor portion 122 and the compression mechanism portion 124, has the outer circumferential wall 120a in the form of a tubular circumferential wall.

### (Temperature Sensor 60)

The temperature sensor 60 is fixed to the outer circumferential wall 120a of the hermetic container 120. The temperature sensor 60 is a measuring device that measures the temperature of the outer circumferential wall 120a of the hermetic container 120 to detect the temperature of the electric motor portion 122 of the compressor 101. That is, the compressor 101 is a measured object that is to be measured by the temperature sensor 60. The compressor 101 is illustrative of an exemplary measured object, and a measured object to be measured by the temperature sensor 60 is not limited to the compressor 101. Alternatively, for example, a measured object may be the refrigerant pipe 16.

The temperature sensor 60 has a cuboid shape. The temperature sensor 60 may have any shape other than a cuboid as long as the shape allows the temperature sensor 60 to be accommodated inside a sensor holder 40.

The temperature sensor 60 is attached to a location on the outer circumferential surface of the outer circumferential wall 120a of the hermetic container 120 that corresponds to the location of the electric motor portion 122 incorporated in the hermetic container 120. That is, the temperature sensor 60 is positioned opposite to the electric motor portion 122 with the outer circumferential wall 120a of the hermetic container 120 located between the temperature sensor 60 and the electric motor portion 122. The temperature sensor 60 is fixed by use of the temperature-sensor fixing device 10 to the outer circumferential wall 120a of the hermetic container 120.

### [Temperature-sensor Fixing Device 10]

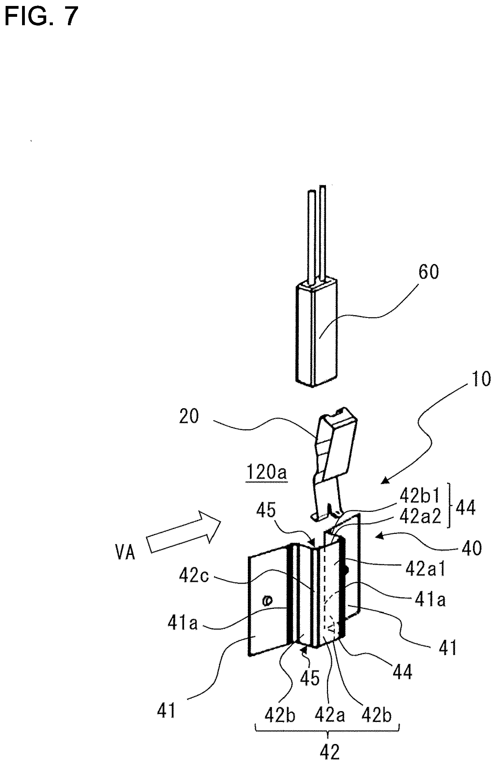

Fig. 7 is an exploded perspective view of the temperature-sensor fixing device 10 illustrated in Fig. 6. The temperature-sensor fixing device 10 is used to fix the temperature sensor 60 to the outer circumferential wall 120a of a measured object such as the compressor 101. The temperature-sensor fixing device 10 includes the sensor holder 40 and a plate spring 20.

### (Sensor Holder 40)

The sensor holder 40 defines, when the sensor holder 40 is fixed on the hermetic container 120 of the compressor 101, which is a measured object, a tubular body with an opening 45 provided at each end. The sensor holder 40 accommodates the temperature sensor 60 inside the sensor holder 40. The sensor holder 40 is made of a sheet metal. The sensor holder 40 may not necessarily be made of a sheet metal. The material of the sensor holder 40 is not limited to a particular material. For example, the sensor holder 40 may be made of resin.

As illustrated in Fig. 7, the sensor holder 40 has two attaching portions 41 and an accommodating portion 42 provided between the two attaching portions 41. Each of the attaching portions 41 and the accommodating portion 42 are integrated with each other. The attaching portion 41 and the accommodating portion 42 are bent to each other, for example. The attaching portion 41 and the accommodating portion 42 may not necessarily be integrated with each other. Alternatively, the attaching portion 41 and the accommodating portion 42 may be formed as separate parts.

The attaching portion 41 is to be fixed to the hermetic container 120 of the compressor 101. The attaching portion 41 is a plate-shaped part. Although the attaching portion 41 is a rectangular part extending in the axial direction of the rotary shaft 126 illustrated in Fig. 6, the attaching portion 41 may not necessarily have the above-mentioned shape. The attaching portion 41 and the outer circumferential wall 120a of the hermetic container 120 are fixed to each other by, for example, welding or other method. The attaching portion 41 and the outer circumferential wall 120a may be fixed to each other by any known fixing method, and may not necessarily be fixed to each other by welding.

The accommodating portion 42 accommodates the temperature sensor 60 inside the accommodating portion 42. When the accommodating portion 42 is fixed to the hermetic container 120 of the compressor 101, the accommodating portion 42 extends in the axial direction of the rotary shaft 126 illustrated in Fig. 6. The accommodating portion 42 has a U-shape in a cross-section perpendicular to the direction in which the accommodating portion 42 extends. When the accommodating portion 42 is fixed to the hermetic container 120 of the compressor 101, the accommodating portion 42 defines, together with the outer circumferential wall 120a of the hermetic container 120, a tubular body with the opening 45 provided at each end of the accommodating portion 42. The opening 45 is partially defined by an end edge 44 of the accommodating portion 42.

The accommodating portion 42 has a locking portion 42a and two lateral wall portions 42b. The locking portion 42a and the two lateral wall portions 42b are lateral walls of the accommodating portion 42. With the temperature-sensor fixing device 10 fixed on the hermetic container 120 of the compressor 101, the accommodating portion 42 has a space inside the accommodating portion 42 that is defined by the inner wall surface of the locking portion 42a, the respective inner wall surfaces of the two lateral wall portions 42b, and the outer wall surface of the outer circumferential wall 120a of the hermetic container 120.

With the temperature-sensor fixing device 10 fixed on the hermetic container 120 of the compressor 101, the locking portion 42a is located opposite to the outer circumferential wall 120a of the hermetic container 120 with a space between the locking portion 42a and the outer circumferential wall 120a. The locking portion 42a is a plate-shaped part. The locking portion 42a is a rectangular part extending in the axial direction of the rotary shaft 126 illustrated in Fig. 6. Each of the attaching portions 41 has a lateral edge 41a, and the locking portion 42a has lateral edges 42c. Each of the two lateral wall portions 42b extends between the corresponding one of the lateral edges 41a of the attaching portions 41 and the corresponding one of the lateral edges 42c of the locking portion 42a. Each of the two lateral wall portions 42b is a plate-shaped part. The lateral wall portion 42b is a rectangular part that extends in the axial direction of the rotary shaft 126 illustrated in Fig. 6.

An end edge 42a2 of the locking portion 42a, and an end edge 42b1 of each of the lateral wall portions 42b define the end edge 44 of the accommodating portion 42. Consequently, the end edge 42a2 of the locking portion 42a, and the end edges 42b1 of the lateral wall portions 42b define the opening 45. The end edge 42a2 of the locking portion 42a is an end of the locking portion 42a in the axial direction of the rotary shaft 126 illustrated in Fig. 6. The end edge 42b1 of the lateral wall portion 42b is an end of the lateral wall portion 42b in the axial direction of the rotary shaft 126.

### (Plate Spring 20)

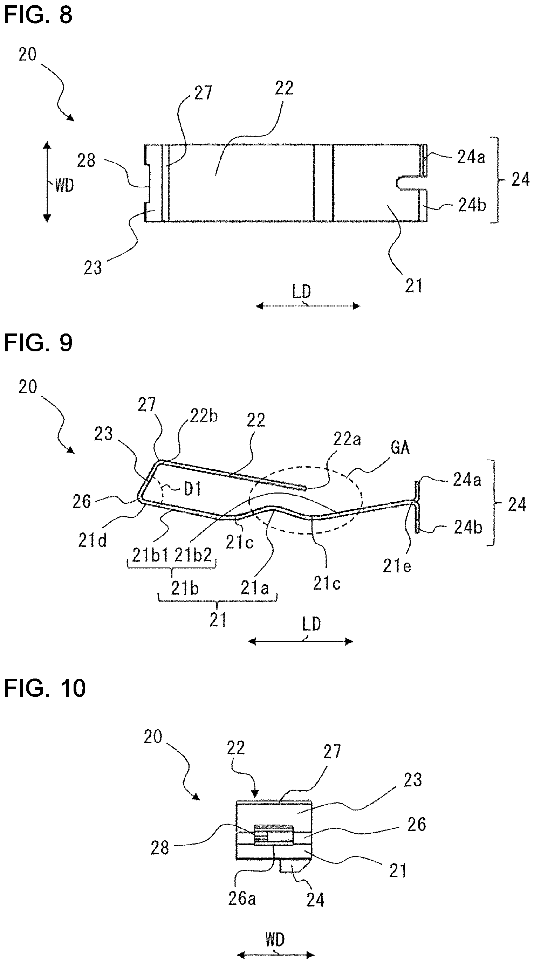

Fig. 8 is a plan view of the plate spring 20 illustrated in Fig. 7. Fig. 9 is a side view of the plate spring 20 illustrated in Fig. 7. Fig. 10 is a front view of the plate spring 20 illustrated in Fig. 7. Reference is made below to Figs. 8 to 10 to describe the plate spring 20. The plate spring 20 is to be attached to the sensor holder 40 to hold the temperature sensor 60 accommodated inside the sensor holder 40. The plate spring 20 is a flat spring in the form of a plate and made of metal. The material of the plate spring 20 is not limited to metal. The plate spring 20 has a pressing plate 21, a fixed plate 22, a connecting plate 23, and a first bent portion 26. The plate spring 20 further has a second bent portion 27.

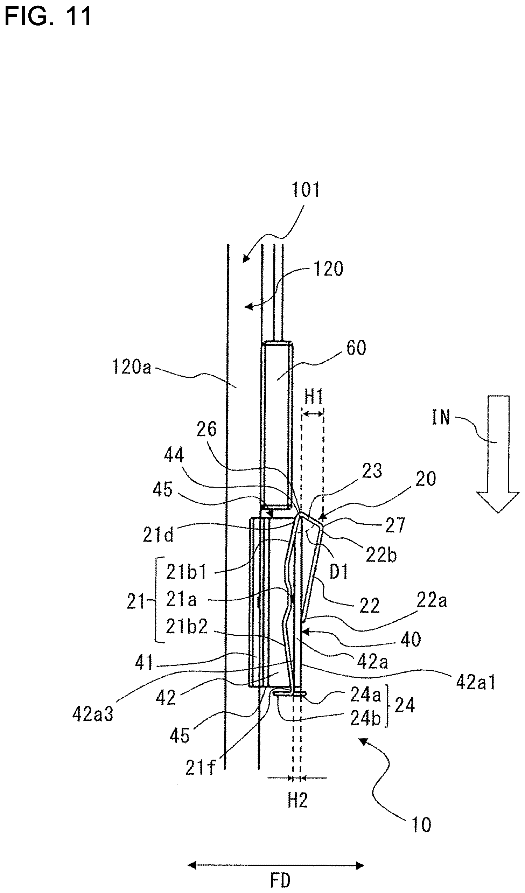

The pressing plate 21 is accommodated inside the accommodating portion 42 of the sensor holder 40, and extends in an insertion direction IN (see Fig. 11 described later) in which the temperature sensor 60 is to be inserted into the sensor holder 40. The pressing plate 21 has a length greater than the length between one end edge 44 and the other end edge 44 of the accommodating portion 42. When the temperature sensor 60 is accommodated inside the accommodating portion 42 of the sensor holder 40, the pressing plate 21 presses the temperature sensor 60 against the compressor 101, which is a measured object.

The pressing plate 21 has a curved portion 21a and two plate-shaped portions 21b. The curved portion 21a is curved in an arcuate shape. The two plate-shaped portions 21b each extend from the corresponding one of opposite ends of the curved portion 21a, and are inclined toward each other in a direction in which the curved portion 21a is convex. A boundary portion 21c, which is located at the boundary between the curved portion 21a and each plate-shaped portion 21b, has a gently curved shape. The boundary portion 21c is curved to be convex in a direction opposite to the direction in which the curved portion 21a is convex. In other words, the curved portion 21a is a portion having the shape of a valley between two boundary portions 21c each having the shape of a crest.

The pressing plate 21 has a proximal end 21d, which is one end in a direction in which the pressing plate 21 extends, and a distal end 21e, which is the other end. The proximal end 21d is fixed to the first bent portion 26 described later, and integrated with the connecting plate 23 via the first bent portion 26. The distal end 21e serves as a movable free end that is movable by use of the elastic force of the plate spring 20 toward or away from the location of the fixed plate 22.

The plate-shaped portions 21b are a center-side plate-shaped portion 21b1 and an end-side plate-shaped portion 21b2. The center-side plate-shaped portion 21b1 is one of the plate-shaped portions 21b that is located between the curved portion 21a and the first bent portion 26. The end-side plate-shaped portion 21b2 is the other of the plate-shaped portions 21b that is located across the curved portion 21a from the center-side plate-shaped portion 21b1. The center-side plate-shaped portion 21b1 and the end-side plate-shaped portion 21b2 are inclined toward each other in a direction in which the curved portion 21a is convex.

The proximal end 21d, which is an end of the center-side plate-shaped portion 21b1, is integrated with the connecting plate 23 via the first bent portion 26. The distal end 21e, which is an end of the end-side plate-shaped portion 21b2, has a bifurcated portion 24. The bifurcated portion 24 has a first distal end 24a and a second distal end 24b. The first distal end 24a is bent to extend in a direction in which the curved portion 21a is convex. The second distal end 24b is bent to extend in a direction in which the boundary portion 21c is convex.

The fixed plate 22 is positioned to face the sensor holder 40. The fixed plate 22 extends in the insertion direction IN (see Fig. 11 described later) in which the temperature sensor 60 is to be inserted into the sensor holder 40. The fixed plate 22 is configured to clamp the locking portion 42a of the sensor holder 40 between the fixed plate 22 and the pressing plate 21. The fixed plate 22 is formed in the shape of a rectangular plate. The fixed plate 22 has a proximal end 22b, which is one end in a direction in which the fixed plate 22 extends, and a distal end 22a, which is the other end. The proximal end 22b is fixed to the second bent portion 27 described later, and integrated with the connecting plate 23 via the second bent portion 27. The fixed plate 22 is integrated with the pressing plate 21 via the connecting plate 23. The distal end 22a serves as a movable free end that is movable by use of the elastic force of the plate spring 20 toward or away from the pressing plate 21.

The connecting plate 23 extends between the proximal end 21d of the pressing plate 21 and the proximal end 22b of the fixed plate 22, the proximal end 21d is one end of opposite ends of the pressing plate 21 that is closer to a location from which the temperature sensor 60 is to be inserted than is the other end, and the proximal end 22b is one end of opposite ends of the fixed plate 22 that is closer to the location from which the temperature sensor 60 is to be inserted than is the other end. In other words, the connecting plate 23 extends between the first bent portion 26 and the second bent portion 27. The connecting plate 23 is formed in the shape of a rectangular plate.

As illustrated in Fig. 9, the first bent portion 26 is located between the center-side plate-shaped portion 21b1 of the pressing plate 21 and the connecting plate 23, and bent such that an angle D1, which is an angle between the center-side plate-shaped portion 21b1 of the pressing plate 21 and the connecting plate 23, is an acute angle. That is, the angle D1 between the pressing plate 21 and the connecting plate 23 is formed by the first bent portion 26.

The first bent portion 26 has a cutout 28 that defines a through-hole of the plate spring 20. As illustrated in Figs. 8 and 10, the cutout 28 is located in a central portion 26a of the plate spring 20 in a widthwise direction WD of the plate spring 20 in which the first bent portion 26 extends. The widthwise direction WD is a direction perpendicular to a direction LD, which is a direction in which the pressing plate 21 extends when the plate spring 20 is seen in plan view. Although it is desired that the cutout 28 be located in the central portion 26a of the plate spring 20 in the widthwise direction WD, the cutout 28 may be off from the central portion 26a of the plate spring 20. Although the cutout 28 has a rectangular shape defined by edges of the plate spring 20 as illustrated in Fig. 10, the plate spring 20 may not necessarily have a rectangular shape.

Although a single cutout 28 is provided in the first bent portion 26, the number of cutouts 28 to be provided is not limited to one. Alternatively, multiple cutouts 28 may be provided. In one desired example, when multiple cutouts 28 are to be provided, then in addition to the cutout 28 provided in the central portion 26a, the same number of cutouts 28 are provided at each side of the central portion 26a. In another example, when multiple cutouts 28 are to be provided, no cutout 28 may be provided in the central portion 26a, and the same number of cutouts 28 may be provided at each side of the central portion 26a.

The second bent portion 27 is a bent portion located and bent between the connecting plate 23 and the fixed plate 22. Although the angle between the connecting plate 23 and the fixed plate 22 formed by the second bent portion 27 is an obtuse angle, the angle formed by the second bent portion 27 is not limited to an obtuse angle. For example, the angle between the connecting plate 23 and the fixed plate 22 formed by the second bent portion 27 may be a right angle.

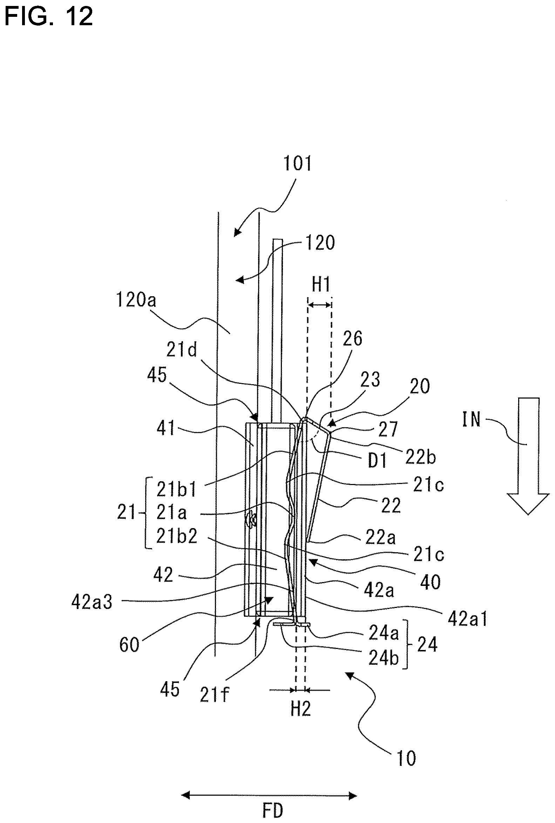

Fig. 11 conceptually illustrates the temperature-sensor fixing device 10 according to the embodiment prior to insertion of the temperature sensor 60. Fig. 12 conceptually illustrates the temperature-sensor fixing device 10 according to the embodiment with the temperature sensor 60 accommodated inside the temperature-sensor fixing device 10. Figs. 11 and 12 each depict the temperature-sensor fixing device 10 in a see-through manner to clearly illustrate the internal structure of the temperature-sensor fixing device 10. The insertion direction IN shown by an open arrow in Figs. 11 and 12 represents the direction in which the temperature sensor 60 is to be inserted into the sensor holder 40.

First, the attaching portions 41 of the sensor holder 40 are fixed to the outer circumferential wall 120a of the hermetic container 120, and the sensor holder 40 is thus attached to the compressor 101.

Reference is made below to Fig. 11 to describe how the plate spring 20 is attached to the sensor holder 40. The plate spring 20 is attached to the locking portion 42a of the sensor holder 40. The user attaches the plate spring 20 to the locking portion 42a by inserting the locking portion 42a in between the pressing plate 21 and the fixed plate 22. The plate spring 20 is attached to the sensor holder 40 in the same direction as the insertion direction IN in which the temperature sensor 60 is to be inserted into the sensor holder 40.

As illustrated in Fig. 11, with the plate spring 20 attached to the sensor holder 40, the first bent portion 26 is positioned to face the end edge 44 of the sensor holder 40 that is an end edge defining the opening 45 from which the temperature sensor 60 is to be inserted into the sensor holder 40. At this time, since the first bent portion 26 is bent such that the angle D1 between the center-side plate-shaped portion 21b1 of the pressing plate 21 and the connecting plate 23 is an acute angle, the first bent portion 26 is hooked on the end edge 44 of the sensor holder 40. When the insertion direction IN is from the top to bottom of the compressor 101, as the first bent portion 26 is hooked on the end edge 44 of the sensor holder 40, the end edge 44 of the sensor holder 40 holds the plate spring 20 in place.

With the plate spring 20 attached to the sensor holder 40, the pressing plate 21 is positioned in the space defined by the accommodating portion 42 and the outer circumferential wall 120a of the hermetic container 120. Further, with the plate spring 20 attached to the sensor holder 40, the pressing plate 21 faces an inner wall surface 42a3 of the accommodating portion 42. With the plate spring 20 attached to the sensor holder 40, the center-side plate-shaped portion 21b1 and the end-side plate-shaped portion 21b2 are inclined further away from the locking portion 42a of the sensor holder 40 as these plate-shaped portions extend from the end edge 44 toward the center of the sensor holder 40.

Further, with the plate spring 20 attached to the sensor holder 40, the curved portion 21a located between the center-side plate-shaped portion 21b1 and the end-side plate-shaped portion 21b2 is in contact with the locking portion 42a of the sensor holder 40. In the insertion direction IN in which the temperature sensor 60 is to be inserted, the curved portion 21a is in contact with the locking portion 42a of the sensor holder 40 at around the center of the sensor holder 40. The position of contact between the curved portion 21a and the locking portion 42a is not limited to a position around the center of the sensor holder 40 in the insertion direction IN in which the temperature sensor 60 is to be inserted.

As illustrated in Fig. 11, with the plate spring 20 attached to the sensor holder 40, the fixed plate 22 is positioned at the opposite side of the locking portion 42a of the sensor holder 40 across where the pressing plate 21 is positioned. With the plate spring 20 attached to the sensor holder 40, the fixed plate 22 faces an outer wall surface 42a1 of the accommodating portion 42. The distal end 22a of the fixed plate 22 is in contact with the locking portion 42a of the sensor holder 40. As the plate spring 20 is attached to the sensor holder 40, the distal end 22a of the fixed plate 22 clamps the locking portion 42a of the sensor holder 40 between the distal end 22a and the curved portion 21a of the pressing plate 21.

The connecting plate 23, the second bent portion 27, and the fixed plate 22 together have a substantially L-shape. With the plate spring 20 attached to the sensor holder 40, the connecting plate 23, the second bent portion 27, and the fixed plate 22 together have the shape of a crest that extends away from the locking portion 42a with the second bent portion 27 at the apex of the crest. That is, with the plate spring 20 attached to the sensor holder 40, among the connecting plate 23, the second bent portion 27, and the fixed plate 22, the second bent portion 27 is positioned furthest from the locking portion 42a. Further, with the plate spring 20 attached to the sensor holder 40, the connecting plate 23 and the fixed plate 22 are each inclined to the locking portion 42a.

As illustrated in Fig. 12, when the temperature sensor 60 is accommodated inside the accommodating portion 42 of the sensor holder 40, the boundary portion 21c of the pressing plate 21 comes into contact with the temperature sensor 60. At this time, a direction perpendicular to the outer wall surface 42a1 of the sensor holder 40 is defined as a direction FD. The outer wall surface 42a1 is a wall surface that, with the sensor holder 40 fixed on the compressor 101, which is a measured object, is located opposite to the compressor 101, which is a measured object. The outer wall surface 42a1 is the outer wall surface of the locking portion 42a. At one surface of the pressing plate 21 in the direction FD, the curved portion 21a is in contact with the locking portion 42a, and at the other surface of the pressing plate 21 in the direction FD, the boundary portions 21c are in contact with the temperature sensor 60. By use of the elastic force of the plate spring 20, the main of which is the elastic force of the pressing plate 21, the pressing plate 21 presses the temperature sensor 60 against the outer circumferential wall 120a of the hermetic container 120.

As the pressing plate 21 presses the temperature sensor 60 against the outer circumferential wall 120a of the hermetic container 120, the temperature sensor 60 is fixed to the compressor 101, which is a measured object.

As illustrated in Figs. 11 and 12, the bifurcated portion 24 is positioned such that with the plate spring 20 attached to the sensor holder 40, the bifurcated portion 24 projects from the space inside the sensor holder 40 to the space outside of the sensor holder 40. As a result, when the plate spring 20 moves out of place in a direction opposite to the insertion direction IN, the first distal end 24a comes into contact with the locking portion 42a to thereby prevent the plate spring 20 from falling off the sensor holder 40. The second distal end 24b is positioned inside the opening 45 when seen in plan view parallel to the axial direction of the rotary shaft 126 illustrated in Fig. 6. The second distal end 24b covers a part of one of the openings 45. This helps to prevent or reduce excessive pushing, by the user, of the temperature sensor 60 into the sensor holder 40. Further, as a result of the second distal end 24b covering a part of one of the openings 45, the temperature sensor 60 is prevented from falling off the sensor holder 40 in the insertion direction IN.

As illustrated in Figs. 11 and 12, the distance in the direction FD between the outer wall surface 42a1 of the locking portion 42a of the sensor holder 40 and the second bent portion 27 is defined as a first distance H1. Further, as illustrated in Figs. 11 and 12, the distance in the direction FD between the inner wall surface 42a3 of the locking portion 42a of the sensor holder 40 and the outer wall surface 42a1 of the locking portion 42a is defined as a second distance H2. The second distance H2 represents the thickness of a wall defining the locking portion 42a. The temperature-sensor fixing device 10 is designed such that the first distance H1 is greater than the second distance H2 (first distance H1 > second distance H2).

### [Operational Effect of Temperature-sensor Fixing Device 10]

The temperature-sensor fixing device 10 has the first bent portion 26 bent such that the angle D1 between the pressing plate 21 and the connecting plate 23 is an acute angle. The first bent portion 26 is positioned to face the end edge 44 of the sensor holder 40 that is an end edge defining the opening 45. Consequently, the end edge 44 of the sensor holder 40 serves to prevent or reduce movement of the first bent portion 26 out of place in the direction FD perpendicular to a surface of the locking portion 42a that defines the end edge 44 of the sensor holder 40. The plate spring 20 is thus securely fixed to the sensor holder 40.

As a result, the temperature-sensor fixing device 10 makes it possible to prevent or reduce deformation of the fixed plate 22 that may occur when the connecting plate 23 moves out of place, and also to prevent or reduce a movement of the connecting plate 23 that causes the connecting plate 23 to block the opening 45. Therefore, the temperature-sensor fixing device 10 allows for improved ease of assembly in attaching the temperature sensor 60 into the sensor holder 40 again, in comparison to a case where the temperature-sensor fixing device 10 does not have the first bent portion 26 bent to form an acute angle as the angle D1.

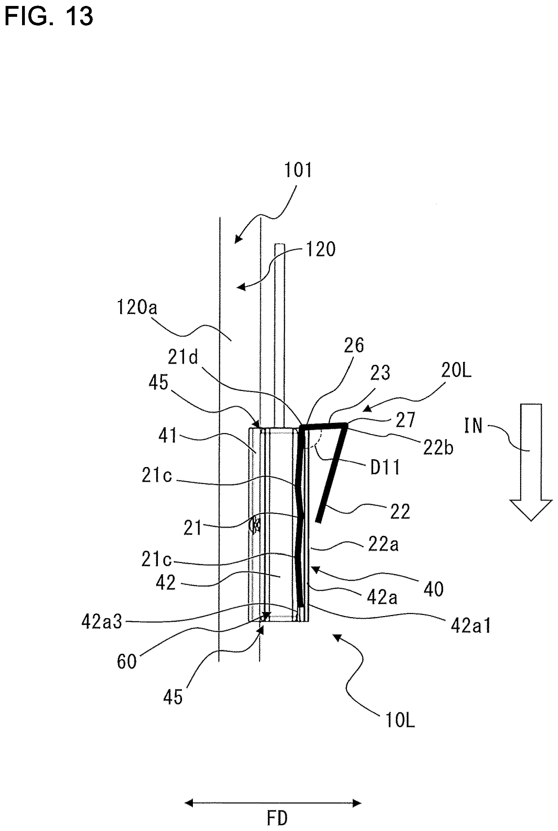

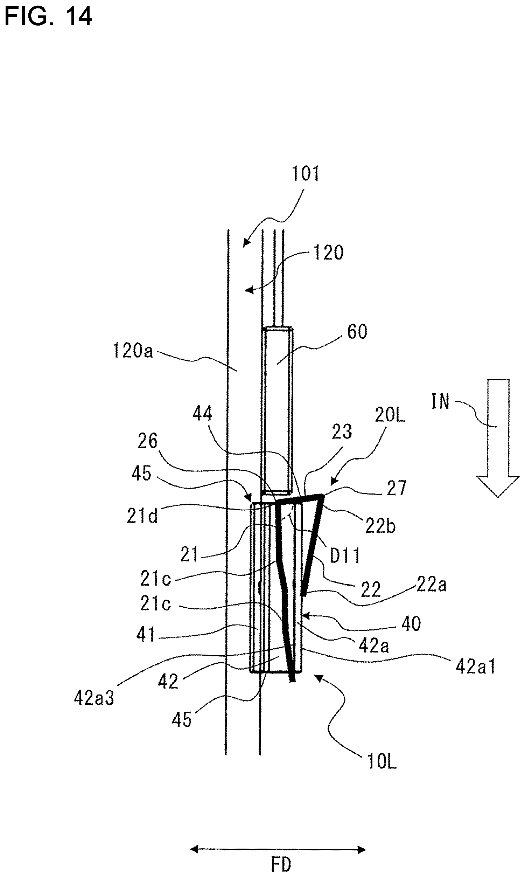

Fig. 13 conceptually illustrates a temperature-sensor fixing device 10L according to a comparative example with the temperature sensor 60 accommodated inside the temperature-sensor fixing device 10L. Fig. 14 conceptually illustrates the temperature-sensor fixing device 10L according to the comparative example after the temperature sensor 60 is detached. Unlike the configuration according to the embodiment, such a configuration is discussed below that the first bent portion 26 forms an angle D11 greater than or equal to 90 degrees. In this case, when the temperature sensor 60 is detached from the sensor holder 40, the connecting plate 23 of the plate spring 20 tends to move out of place toward the hermetic container 120 of the compressor 101. Such movement results in the connecting plate 23 blocking the opening 45 of the sensor holder 40 through which the temperature sensor 60 is to be inserted into the sensor holder 40. This makes it difficult to insert the temperature sensor 60 into the sensor holder 40 again.

This configuration is further elaborated below. When the angle D11 of the first bent portion 26 of a plate spring 20L is a non-acute angle as illustrated in Fig. 13, the boundary portion 21c is pushed toward the inner surface of the sensor holder 40 as the temperature sensor 60 is inserted into the sensor holder 40. As the boundary portion 21c of the plate spring 20L is pushed toward the inner surface of the sensor holder 40, a holder opening GA illustrated in Fig. 9 opens further, which tends to cause deformation as illustrated in Fig. 13.

When the temperature sensor 60 is then drawn out from the sensor holder 40, the plate spring 20L is displaced toward the compressor 101 as illustrated in Fig. 14. As a result, the plate spring 20L blocks, by its spring body, the opening 45 of the sensor holder 40. This makes it difficult to attach the temperature sensor 60 to the sensor holder 40.

By contrast, with the temperature-sensor fixing device 10 according to the embodiment, the angle D1 formed by the first bent portion 26 is an acute angle. Consequently, even when the boundary portion 21c of the plate spring 20 is deformed, the first bent portion 26 is hooked on an end of the sensor holder 40, and thus the plate spring 20 is not displaced toward the compressor 101. That is, even when the temperature sensor 60 is detached from the sensor holder 40, the connecting plate 23 remains fixed at the original location, and thus the plate spring 20 does not block the opening 45 of the sensor holder 40 through which the temperature sensor 60 is to be inserted into the sensor holder 40. Therefore, the temperature-sensor fixing device 10 according to the embodiment allows the temperature sensor 60 to be easily inserted into the sensor holder 40 again. This leads to improved ease of handling.

The sensor holder 40 is clamped between the pressing plate 21 and the fixed plate 22. This configuration of the temperature-sensor fixing device 10 prevents or reduces movement of the distal end 21e of the pressing plate 21, and movement of the distal end 22a of the fixed plate 22. In combination with the above-mentioned effect of the first bent portion 26 that forms the angle D1, the temperature-sensor fixing device 10 makes it possible to further prevent or reduce deformation of the fixed plate 22 that may occur when the connecting plate 23 moves out of place, and also to prevent or reduce a movement of the connecting plate 23 that causes the connecting plate 23 to block the opening 45.

The pressing plate 21 has the curved portion 21a curved in an arcuate shape, and two plate-shaped portions 21b each extending from the corresponding one of opposite ends of the curved portion 21a and inclined toward each other in a direction in which the curved portion 21a is convex. This allows the user to easily insert the temperature sensor 60 into the sensor holder 40, which leads to improved ease of assembly of the compressor 101. The above-mentioned configuration of the temperature-sensor fixing device 10 allows the pressing plate 21 to press the temperature sensor 60 against the compressor 101, which is a measured object. As a result, the temperature sensor 60 is fixed to the compressor 101.

The temperature-sensor fixing device 10 is designed such that the first distance H1, which is the distance between the outer wall surface 42a1 of the sensor holder 40 and the second bent portion 27, is greater than the second distance H2, which is the distance between the inner wall surface 42a3 and the outer wall surface 42a1 of the sensor holder 40. The above-mentioned configuration of the temperature-sensor fixing device 10 ensures that the angle D1 formed by the first bent portion 26 is not excessively small. As a result, the strength of the plate spring 20 against bending improves, which makes it possible to prevent breakage.

The first bent portion 26 has the cutout 28 that defines a through-hole. With the above-mentioned configuration of the temperature-sensor fixing device 10, the strength of the plate spring 20 is adjustable through adjustment of the width of the cutout 28. This obviates the need to use many different types of plate springs as the plate spring 20 of the temperature-sensor fixing device 10. The general versatility of the plate spring 20 is thus improved. In this regard, the greater the width of the cutout 28, the lesser the force with which the plate spring 20 presses the temperature sensor 60 against the compressor 101.

The cutout 28 is located in the central portion 26a of the plate spring 20 in the widthwise direction WD of the plate spring 20 in which the first bent portion 26 extends. The presence of the cutout 28 in the central portion 26a allows for easy adjustment of the strength of the plate spring 20. Further, the temperature-sensor fixing device 10 is designed such that the first bent portion 26 has the same width on each side of the cutout 28. This helps to ensure the strength of the first bent portion 26 in comparison to a case where the first bent portion 26 has different widths on respective sides of the cutout 28.

### [Operational Effect of Compressor 101]

The compressor 101 has the temperature-sensor fixing device 10, and thus provides the same advantage as that according to the embodiment mentioned above. For example, in the temperature-sensor fixing device 10 of the compressor 101, deformation of the fixed plate 22 that may occur when the connecting plate 23 moves out of place is prevented or reduced, and also a movement of the connecting plate 23 that causes the connecting plate 23 to block the opening 45 is prevented or reduced. Therefore, the compressor 101 allows for improved ease of assembly in attaching the temperature sensor 60 into the sensor holder 40 again, in comparison to a case where the temperature-sensor fixing device 10 does not have the first bent portion 26 bent to form an acute angle as the angle D1.

The configurations described above with reference to the embodiment are intended to be illustrative only. These configurations may be combined with other known techniques, or may be partially omitted or changed without departing from the scope of the present disclosure.

### Reference Signs List

1: exterior panel, 2: side panel, 2a: second side portion, 2b: second back portion, 3: top panel, 4: bottom plate, 6: fan guard, 7: opening, 8: air outlet, 9: leg, 10: temperature-sensor fixing device, 11: front portion, 12: side portion, 13: back portion, 14: motor support, 16: refrigerant pipe, 17: partition plate, 18: electrical component box, 20: plate spring, 21: pressing plate, 21a: curved portion, 21b: plate-shaped portion, 21b1: center-side plate-shaped portion, 21b2: end-side plate-shaped portion, 21c: boundary portion, 21d: proximal end, 21e: distal end, 22: fixed plate, 22a: distal end, 22b: proximal end, 23: connecting plate, 24: bifurcated portion, 24a: first distal end, 24b: second distal end, 26: first bent portion, 26a: central portion, 27: second bent portion, 28: cutout, 40: sensor holder, 41: attaching portion, 41a: lateral edge, 42: accommodating portion, 42a: locking portion, 42a1: outer wall, 42a2: end edge, 42a3: inner wall surface, 42b: lateral wall portion, 42b1: end edge, 42c: lateral edge, 44: end edge, 45: opening, 50: housing, 51: air-sending device chamber, 52: machine chamber, 60: temperature sensor, 100: outdoor unit, 101: compressor, 102: flow switching device, 103: indoor heat exchanger, 104: pressure reducing device, 105: outdoor heat exchanger, 108: outdoor air-sending device, 108a: propeller fan, 109: indoor air-sending device, 110: refrigerant circuit, 111: extension pipe, 112: extension pipe, 120: hermetic container, 120a: outer circumferential wall, 122: electric motor portion, 124: compression mechanism portion, 126: rotary shaft, 150: refrigeration cycle apparatus, 200: indoor unit

## Claims

1. A temperature-sensor fixing device (10) for fixing a temperature sensor (60) to a measured object, the measured object being an object to be measured, the temperature-sensor fixing device (10) comprising:
a sensor holder (40) that is configured to define, when the sensor holder (40) is fixed on the measured object, a tubular body with an opening (45) provided at each end, the sensor holder (40) that is configured to accommodate the temperature sensor (60) inside the sensor holder (40); and
a plate spring (20) attached to the sensor holder (40) and configured to hold the temperature sensor (60) accommodated inside the sensor holder (40),
the plate spring (20) having
a pressing plate (21) accommodated inside the sensor holder (40) and extending in an insertion direction in which the temperature sensor (60) is to be inserted into the sensor holder (40),
a fixed plate (22) positioned to face the sensor holder (40) and extending in the insertion direction,
a connecting plate (23) extending between one end of the pressing plate (21) and one end of the fixed plate (22), the one end of the pressing plate (21) being of opposite ends of the pressing plate (21) that is closer to a location from which the temperature sensor (60) is to be inserted than is an other end of the opposite ends of the pressing plate (21), the one end of the fixed plate (22) being of opposite ends of the fixed plate (22) that is closer to the location from which the temperature sensor (60) is to be inserted than is an other end of the opposite ends of the fixed plate (22), and
a first bent portion (26) located between the pressing plate (21) and the connecting plate (23),
the first bent portion (26) being positioned to face an edge of the sensor holder (40), the edge defining the opening (45) from which the temperature sensor (60) is to be inserted into the sensor holder (40),
**characterized in that**
the sensor holder (40) has two attaching portions (41) and an accommodating portion (42) provided between the two attaching portions (41),
wherein the attaching portions (41) are configured to be fixed to the measured object,
wherein the accommodating portion (42) has a U-shape in a cross-section perpendicular to the direction in which the accommodating portion (42) extends and is configured to accommodate the temperature sensor (60) inside the accommodating portion (42), and an end edge (44) of the accommodating portion (42) partially defines the opening (45),
the pressing plate (21) is configured to press the temperature sensor (60) against the measured object when the attaching portions (41) are fixed to the measured object and the temperature sensor (60) is accommodated inside the sensor holder (40),
the fixed plate (22) is configured to clamp the sensor holder (40) between the fixed plate (22) and the pressing plate (21),
the first bent portion (26) is bent to form an acute angle between the pressing plate (21) and the connecting plate (23),
the first bent portion (26) has a cutout (28) that defines a through-hole, and
the pressing plate (21) has
a curved portion (21a) curved in an arcuate shape, and
two plate-shaped portions (21b) each extending from a corresponding one of opposite ends of the curved portion (21a), the two plate-shaped portions (21b) being inclined toward each other in a direction in which the curved portion (21a) is convex.

2. The temperature-sensor fixing device (10) of claim 1,
the two plate-shaped portions (21b) comprises
a center-side plate-shaped portion (21b1) located between the curved portion (21a) and the first bent portion (26), and
an end-side plate-shaped portion (21b2) located across the curved portion (21a) from the center-side plate-shaped portion (21b1), and
the end-side plate-shaped portion (21b2) has a distal end (21e) that has a bifurcated portion (24).

3. The temperature-sensor fixing device (10) of claim 2,
wherein the bifurcated portion (24) has
a first distal end (24a) bent to extend in a direction in which the curved portion (21a) is convex, and
a second distal end (24b) bent to extend in a direction in which a boundary portion (21c) is convex, the boundary portion (21c) being located at a boundary between the curved portion (21a) and each of the two plate-shaped portions (21b).

4. The temperature-sensor fixing device (10) of any one of claims 1 to 3,
wherein the plate spring (20) further has a second bent portion (27) located and bent between the connecting plate (23) and the fixed plate (22), and
wherein, in a direction (FD) perpendicular to an outer wall surface (42a1) of the sensor holder (40), a first distance is greater than a second distance, the outer wall surface (42a1) being a wall surface that is located opposite to the measured object when the sensor holder (40) is fixed on the measured object, the first distance being a distance (H1) between the outer wall surface (42a1) and the second bent portion (27), the second distance being a distance between an inner wall surface (42a3) and the outer wall surface (42a1) of the sensor holder (40).

5. The temperature-sensor fixing device (10) of any one of claims 1 to 4, wherein the cutout (28) is located in a central portion (26a) of the plate spring (20) in a widthwise direction (WD) of the plate spring (20), the widthwise direction (WD) being a direction in which the first bent portion (26) extends.

6. A compressor (101) comprising:
a hermetic container (120) having a cylindrical shape;
a compression mechanism portion (124) accommodated inside the hermetic container (120) and configured to compress refrigerant;
an electric motor portion (122) accommodated inside the hermetic container (120) and configured to drive the compression mechanism portion (124);
a temperature sensor (60) fixed to the hermetic container (120), and positioned opposite to the electric motor portion (122); and
the temperature-sensor fixing device (10) of any one of claims 1 to 5.

## Patentansprüche

1. Temperatursensor-Befestigungsvorrichtung (10) zum Befestigen eines Temperatursensors (60) an einem Messobjekt, wobei das Messobjekt ein zu vermessendes Objekt ist, wobei die Temperatursensor-Befestigungsvorrichtung (10) aufweist:
einen Sensorhalter (40), der ausgebildet ist, einen an beiden Enden mit einer Öffnung (45) versehenen röhrenförmigen Körper festzulegen, wenn der Sensorhalter (40) an dem Messobjekt befestigt ist, wobei der Sensorhalter (40) ausgebildet ist, den Temperatursensor (60) im Inneren des Sensorhalters (40) aufzunehmen; und
eine Blattfeder (20), die an dem Sensorhalter (40) befestigt ist und ausgebildet ist, den im Inneren des Sensorhalters (40) aufgenommenen Temperatursensor (60) zu haltern,
wobei die Blattfeder (20) besitzt:
eine pressende Platte (21), die im Inneren des Sensorhalters (40) aufgenommen ist, und sich in eine Einführungsrichtung erstreckt, in welcher der Temperatursensor (60) in den Sensorhalter (40) einzuführen ist,
eine feststehende Platte (22), die so positioniert ist, dass sie dem Sensorhalter (40) gegenüberliegt, und die sich in die Einführungsrichtung erstreckt,
eine verbindende Platte (23) die sich zwischen einem Ende der pressenden Platte (21) und einem Ende der feststehenden Platte (22) erstreckt, wobei das eine Ende der pressenden Platte (21) dasjenige von einander gegenüberliegenden Enden der pressenden Platte (21) ist, welches näher an einem Ort liegt, von dem aus der Temperatursensor (60) einzuführen ist, als das andere Ende der einander gegenüberliegenden Enden der pressenden Platte (21), wobei das eine Ende der feststehenden Platte (22) dasjenige Ende von einander gegenüberliegenden Enden der feststehenden Platte (22) ist, dass näher an dem Ort liegt, von dem aus der Temperatursensor (60) einzuführen ist, als das andere Ende von einander gegenüberliegenden Enden der feststehenden Platte (22), und
einen ersten gebogenen Abschnitt (26), der zwischen der pressenden Platte (21) und der verbindenden Platte (23) angeordnet ist,
wobei der erste gebogene Abschnitt (26) so positioniert ist, dass er einer Kante des Sensorhalters (40) gegenüberliegt, wobei die Kante diejenige Öffnung (45) festlegt, von der aus der Temperatursensor (60) in den Sensorhalter (40) einzuführen ist,
**dadurch gekennzeichnet, dass**
der Sensorhalter (40) zwei Befestigungsabschnitte (41) und einen Aufnahmeabschnitt (42) besitzt, welcher Aufnahmeabschnitt zwischen den beiden Befestigungsabschnitten (41) vorgesehen ist,
wobei die Befestigungsabschnitte (41) ausgebildet sind, an dem Messobjekt befestigt zu werden,
wobei der Aufnahmeabschnitt (42) in einem Querschnitt senkrecht zu der Richtung, in welche sich der Aufnahmeabschnitt (42) erstreckt, eine U-Form aufweist, und ausgebildet ist, den Temperatursensor (60) im Inneren des Aufnahmeabschnitts (42) aufzunehmen, und wobei eine Endkante (44) des Aufnahmeabschnittes (42) die Öffnung (45) teilweise festlegt,
wobei die pressende Platte (21) ausgebildet ist, den Temperatursensor (60) gegen das Messobjekt zu drücken, wenn die Befestigungsabschnitte (41) an dem Messobjekt befestigt sind, und der Temperatursensor (60) im Inneren des Sensorhalters (40) aufgenommen ist,
wobei die feststehende Platte (22) ausgebildet ist, den Sensorhalter (40) zwischen der feststehenden Platte (22) und der pressenden Platte (21) festzuklemmen,
wobei der erste gebogene Abschnitt (26) so gebogen ist, dass er zwischen der pressenden Platte (21) und der verbindenden Platte (23) einen spitzen Winkel bildet,
wobei der erste gebogene Abschnitt (26) einen Ausschnitt (28) besitzt, der eine Durchgangsöffnung festlegt, und die pressende Platte (21) aufweist:
einen gekrümmten Abschnitt (21a), der in einer Bogenform gekrümmt ist, und
zwei plattenförmige Abschnitte (21b), die sich jeweils von einander gegenüberliegenden Enden des gekrümmten Abschnittes (21a) erstrecken, wobei die beiden plattenförmigen Abschnitte (21b) gegeneinander in einer Richtung geneigt sind, in welcher der gekrümmte Abschnitt (21a) konvex ist.

2. Temperatursensor-Befestigungsvorrichtung (10) nach Anspruch 1,
wobei die beiden plattenförmigen Abschnitte (21b) aufweisen:
einen zentralen plattenförmigen Abschnitt (21b1) der zwischen dem gekrümmten Abschnitt (21a) und dem ersten gebogenen Abschnitt (26) angeordnet ist, und
einen endseitigen plattenförmigen Abschnitt (21b2) der bezogen auf den zentralen plattenförmigen Abschnitt (21b1) jenseits des gekrümmten Abschnitts (21a) angeordnet ist, und
wobei der endseitige plattenförmige Abschnitt (21b2) ein distales Ende (21e) aufweist, das einen gegabelten Abschnitt (24) aufweist.

3. Temperatursensor-Befestigungsvorrichtung (10) nach Anspruch 2,
wobei der gegabelte Abschnitt (24) besitzt:
ein erstes distales Ende (24a), das so gebogen ist, dass es sich in eine Richtung erstreckt, in welcher der gebogene Abschnitt (21a) konvex ist, und
ein zweites distales Ende (24b), das so gebogen ist, dass es sich in eine Richtung erstreckt, in welche ein Grenzabschnitt (21c) konvex ist, wobei der Grenzabschnitt (21c) an einer Grenze zwischen dem gekrümmten Abschnitt (21a) und jedem der beiden plattenförmigen Abschnitte (21b) angeordnet ist.

4. Temperatursensor-Befestigungsvorrichtung (10) nach einem der Ansprüche 1 bis 3,
wobei die Blattfeder (20) weiter einen zweiten gebogenen Abschnitt besitzt, der zwischen der verbindenden Platte (23) und der feststehenden Platte (22) angeordnet ist und gebogen ist, und
wobei in einer Richtung (FD), die zu einer Außenwand-Oberfläche (42a1) des Sensorhalters (40) senkrecht ist, ein erster Abstand größer als ein zweiter Abstand ist, wobei die Außenwand-Oberfläche (42a1) eine Wandoberfläche ist, die dem Messobjekt abgewandt angeordnet ist, wenn der Sensorhalter (40) an dem Messobjekt befestigt ist, wobei der erste Abstand ein Abstand (H1) zwischen der Außenwand-Oberfläche (42a1) und dem zweiten gebogenen Abschnitt (27) ist, wobei der zweite Abstand ein Abstand zwischen einer Innenwand-Oberfläche (42a3) und der Außenwand-Oberfläche (42a1) des Sensorhalters (40) ist.

5. Temperatursensorbefestigungsvorrichtung (10) nach einem der Ansprüche 1 bis 4, wobei der Ausschnitt (28) in einem zentralen Abschnitt (26a) der Blattfeder (20) in einer Breitenrichtung (WD) der Blattfeder (20) angeordnet ist, wobei die Breitenrichtung (WD) eine Richtung ist, in welche sich der erste gebogene Abschnitt (26) erstreckt.

6. Kompressor (101) aufweisend:
einen hermetischen Behälter (120), der eine zylindrische Form besitzt;
einen Kompressionsmechanismus-Abschnitt (124), der im Inneren des hermetischen Behälters (120) untergebracht ist, und ausgebildet ist, ein Kältemittel zu komprimieren;
einen Elektromotor-Abschnitt (122), der im Inneren des hermetischen Behälters (120) untergebracht ist, und ausgebildet ist, den Kompressionsmechanismus-Abschnitt (124) anzutreiben;
einen Temperatursensor (60), der an dem hermetischen Behälter (120) befestigt ist, und dem Elektromotor-Abschnitt (122) gegenüberliegend positioniert ist; und
die Temperatursensor-Befestigungsvorrichtung (10) nach einem der Ansprüche 1 bis 5.

## Revendications

1. Dispositif de fixation de capteur de température (10) pour fixer un capteur de température (60) à un objet mesuré, l'objet mesuré étant un objet à mesurer, le dispositif de fixation de capteur de température (10) comprenant :
un support de capteur (40) qui est conçu pour définir, lorsque le support de capteur (40) est fixé sur l'objet mesuré, un corps tubulaire avec une ouverture (45) prévue à chaque extrémité, le support de capteur (40) étant conçu pour accueillir le capteur de température (60) à l'intérieur du support de capteur (40) ;
et
un ressort à lames (20) fixé au support de capteur (40) et conçu pour maintenir le capteur de température (60) logé à l'intérieur du support de capteur (40),
le ressort à lames (20) possédant une lame de pression (21) logée à l'intérieur du support de capteur (40) et s'étendant dans une direction d'insertion dans laquelle le capteur de température (60) doit être inséré dans le support de capteur (40),
une lame fixe (22) positionnée face au support de capteur (40) et s'étendant dans la direction d'insertion,
une lame de liaison (23) s'étendant entre une extrémité de la lame de pression (21) et une extrémité de la lame fixe (22), ladite extrémité de la lame de pression (21) étant celle des extrémités opposées de la lame de pression (21) qui est plus proche d'un emplacement à partir duquel le capteur de température (60) doit être inséré qu'une autre extrémité des extrémités opposées de la lame de pression (21), ladite extrémité de la lame fixe (22) étant celle des extrémités opposées de la lame fixe (22) qui est plus proche de l'emplacement à partir duquel le capteur de température (60) doit être inséré qu'une autre extrémité des extrémités opposées de la lame fixe (22), et
une première partie courbée (26) située entre la lame de pression (21) et la lame de liaison (23), la première partie courbée (26) étant positionnée pour faire face à un bord du support de capteur (40), le bord définissant l'ouverture (45) à partir de laquelle le capteur de température (60) doit être inséré dans le support de capteur (40),
**caractérisé en ce que**
le support de capteur (40) possède deux parties de fixation (41) et une partie de logement (42) située entre les deux parties de fixation (41),
dans lequel les parties de fixation (41) sont conçues pour être fixées à l'objet mesuré, dans lequel la partie de logement (42) a une forme en U dans une section transversale perpendiculaire à la direction dans laquelle la partie de logement (42) s'étend et est conçue pour loger le capteur de température (60) à l'intérieur de la partie de logement (42), et un bord d'extrémité (44) de la partie de logement (42) définit partiellement l'ouverture (45),
la lame de pression (21) est conçue pour presser le capteur de température (60) contre l'objet mesuré lorsque les parties de fixation (41) sont fixées à l'objet mesuré et que le capteur de température (60) est logé à l'intérieur du support de capteur (40),
la lame fixe (22) est conçue pour serrer le support de capteur (40) entre la lame fixe (22) et la lame de pression (21),
la première partie courbée (26) est courbée pour former un angle aigu entre la lame de pression (21) et la lame de liaison (23),
la première partie courbée (26) possède une découpe (28) qui définit un trou traversant, et la lame de pression (21) possède
une partie incurvée (21a) incurvée en forme d'arc, et
deux parties en forme de plaque (21b) s'étendant chacune à partir d'une extrémité opposée correspondante des extrémités opposées de la partie incurvée (21a), les deux parties en forme de plaque (21b) étant inclinées l'une vers l'autre dans une direction dans laquelle la partie incurvée (21a) est convexe.

2. Dispositif de fixation de capteur de température (10) selon la revendication 1, les deux parties en forme de plaque (21b) comprennent
une partie en forme de plaque côté centre (21b1) située entre la partie incurvée (21a) et la première partie courbée (26), et
une partie en forme de plaque côté extrémité (21b2) située en travers de la partie incurvée (21a) à partir de la partie en forme de plaque côté centre (21b1), et
la partie en forme de plaque côté extrémité (21b2) a une extrémité distale (21e) qui a une partie bifurquée (24).

3. Dispositif de fixation de capteur de température (10) selon la revendication 2, dans lequel la partie bifurquée (24) possède
une première extrémité distale (24a) courbée pour s'étendre dans une direction dans laquelle la partie incurvée (21a) est convexe, et
une seconde extrémité distale (24b) courbée pour s'étendre dans une direction dans laquelle une partie limite (21c) est convexe, la partie limite (21c) étant située au niveau d'une limite entre la partie incurvée (21a) et chacune des deux parties en forme de plaque (21b).

4. Dispositif de fixation de capteur de température (10) selon l'une quelconque des revendications 1 à 3,
dans lequel le ressort à lames (20) possède en outre une seconde partie courbée (27) située et courbée entre la lame de liaison (23) et la lame fixe (22), et
dans lequel, dans une direction (FD) perpendiculaire à une surface de paroi extérieure (42a1) du support de capteur (40), une première distance est supérieure à une seconde distance, la surface de paroi extérieure (42a1) étant une surface de paroi qui est située à l'opposé de l'objet mesuré lorsque le support de capteur (40) est fixé sur l'objet mesuré, la première distance étant une distance (H1) entre la surface de paroi extérieure (42a1) et la seconde partie courbée (27), la seconde distance étant une distance entre une surface de paroi intérieure (42a3) et la surface de paroi extérieure (42a1) du support de capteur (40).

5. Dispositif de fixation de capteur de température (10) selon l'une quelconque des revendications 1 à 4, dans lequel la découpe (28) est située dans une partie centrale (26a) du ressort à lames (20) dans une direction de largeur (WD) du ressort à lames (20), la direction de largeur (WD) étant une direction dans laquelle la première partie courbée (26) s'étend.

6. Compresseur (101) comprenant :
un récipient hermétique (120) de forme cylindrique ;
une partie mécanisme de compression (124) logée à l'intérieur du conteneur hermétique (120) et configurée pour comprimer le réfrigérant ;
une partie moteur électrique (122) logée à l'intérieur du récipient hermétique (120) et configurée pour entraîner la partie mécanisme de compression (124) ;
un capteur de température (60) fixé au récipient hermétique (120) et positionné à l'opposé de la partie moteur électrique (122) ; et
le dispositif de fixation de capteur de température (10) selon l'une quelconque des revendications 1 à 5.
